# EUROPEAN PATENT APPLICATION

(11) **EP 4 600 541 A1**
(43) Date of publication of application: **13.08.2025**
(21) Application number: 25156483.7
(22) Date of filing: 07.02.2025
(51) Int. Cl.: F16P 3/08, F16P 3/12

(54) **SAFETY DEVICE INCLUDING ANTI-TAMPER MEANS AND PRODUCTION METHOD THEREOF**

(30) Priority: 09.02.2024 IT 202400002740
(71) Applicant: Pizzato Elettrica S.r.l., 36063 Marostica (Vicenza) (IT)
(72) Inventor: PIZZATO, Marco, 36063 MAROSTICA (VI) (IT); PIZZATO, Giuseppe, 36063 MAROSTICA (VI) (IT)
(74) Representative: Studio Torta S.p.A.

(57) **Abstract**

A safety device (1) configured to be installed on an industrial machine or plant (100) to prevent start-up of the machine (100) when the latter is in a condition of potential danger for an operator, wherein the device comprises: installation means (23) to mechanically and/or electrically and/or electronically connect the safety device (1) to the machine (10) by creating an original installed condition and anti-tamper means (20) associated with the installation means (20) and including a respective identification element (21) .

## Description

### CROSS-REFERENCE TO RELATED PATENT APPLICATIONS

This application claims the priority of Italian Patent Application No. 102024000002740 filed on February 9, 2024, the subject matter of which is incorporated herein by reference.

### TECHNICAL SECTOR

The present invention relates, for example but without limiting the generality hereof, to a safety device for industrial machines or plants, provided with anti-tamper means, suitable for preventing hazardous operation of the machine or plant. The present invention also refers to a process for producing the safety device.

### STATE OF THE ART

As is known, an industrial machine or plant, hereinafter referred to as a machine, that presents a condition of danger during its operation is generally equipped with safety devices that prevent an operator from coming into contact with the condition of danger.

For example, this condition of danger occurs when operating parts of the industrial machine are in motion, under pressure and/or at high temperature.

Examples of safety devices are safety switches fitted to machine access guards which inhibit the operation of the machine if they detect a condition of danger such as a guard positioned so as to allow an operator to get inside the machine. Generally, safety switches can either inhibit machine operation directly, or they can be connected to a machine control unit to signal a condition of danger. In the latter case, the machine control unit inhibits the operation of the machine when a condition of danger is signalled.

Generally, for safety devices to function correctly, i.e. to guarantee operator safety, they must be installed in the machine or plant according to precise installation diagrams, e.g. defined by the workplace safety regulations in force in the area where the machine operates.

Furthermore, it is essential that safety devices are always maintained in their original installed condition during the operational life of the machine or plant.

To ensure this, it is required that safety devices include anti-tamper elements to prevent tampering with the safety devices and modifying their original installed condition.

An example of anti-tamper elements are cover caps applied over the screws that secure the safety device to the machine or to an enclosure of the machine. These cover caps prevent an operator from removing the safety device, or a part of it, from its original installed position.

For example, in the case of safety switches with a separate actuator where the switch is fixed to a fixed part of a guard and the actuator is fixed to a movable part of the guard, the cover caps prevent an operator from easily removing the actuator from the movable part of the guard and independently moving it near to the safety switch, or vice versa, while keeping the guard open.

Another example of anti-tamper elements are protective shells that can be fitted to the connector of a safety device which are suitable for preventing the disconnection of the safety device from the cable connecting it to the machine or its control unit. In this case, in order to disconnect the cable, it is necessary to visibly and irreversibly damage the protective element itself. Therefore, also in this case, it is no longer possible to restore the original connected condition without making the previous tampering evident.

Of course, an operator can always disassemble the actuator from the moving part of the guard, but to do so, they must necessarily damage the anti-tamper elements, i.e. the cover caps, making the tampering evident. Once disassembled by damaging the anti-tamper elements, it is no longer possible to fix the safety device in its original position without making the previous tampering evident. In fact, the tampering is made evident by the damage or absence of the previously damaged anti-tamper elements to change the original installed condition of the safety device.

This acts as a safeguard for the manufacturer of the machine, or whoever is responsible for the correct installation of the machine, since, should an accident occur, any tampering with the safety device would be evident by the absence of the anti-tamper elements.

The Applicant noted that a safety device is normally supplied to a industrial machine or plant manufacturer with sufficient anti-tamper elements for a single installation. Furthermore, in order to avoid the risk that tampering could be masked, such anti-tamper elements are not normally available on the market. In fact, if they were readily available on the market, any tampering would be easily masked by applying new anti-tamper elements found on the market.

In this context, it is no longer possible for an industrial machine or plant manufacturer who has installed a safety device to change the position of the device without damaging the anti-tamper means.

Therefore, if the safety device is installed inaccurately, it is not possible for the machine manufacturer to reposition it without damaging the anti-tamper means.

This is dangerous as it could lead to the machine manufacturer marketing a machine without the means to prevent tampering.

The purpose of the present invention is therefore to provide a safety device with anti-tamper means, for which it is possible to change the installed condition without compromising the effectiveness of the anti-tamper means.

The purpose of the present invention is therefore to provide a safety device with anti-tamper means that is inexpensive and simple to construct.

A further purpose of the present invention is to develop a production process for a safety device, for which it is possible to change the installed condition without compromising the effectiveness of the anti-tamper means.

### SUMMARY OF THE INVENTION

In accordance with the aforementioned objectives, according to the present invention a safety device is provided as defined in claim 1 and preferably, but not necessarily, in any of the claims dependent thereon.

The claims describe preferred forms of embodiment of the present invention and form an integral part of this description.

### BRIEF DESCRIPTION OF THE DRAWINGS

In the following, certain forms of implementation of the invention will be described for a better understanding of the invention by way of non-limiting example and with reference to the attached figures, in which:
- Figure 1 is a schematic view of a machine protected by an enclosure to which a safety device according to the present invention is associated;
- Figure 2 is a schematic diagram of a safety device according to the present invention connected to a machine control unit;
- Figures 3 and 4 are axonometric views of a safety device provided with anti-tamper means according to an embodiment of the present invention, in an exploded condition and in an installed condition, respectively;
- Figures 5 and 6 are enlargements of Figure 4;
- Figures 7 and 8 are axonometric views of a safety device provided with anti-tamper means according to an embodiment of the present invention, in an exploded condition and in an installed condition, respectively;
- Figures 9 and 10 are enlargements of Figure 8.

### EMBODIMENTS OF THE INVENTION

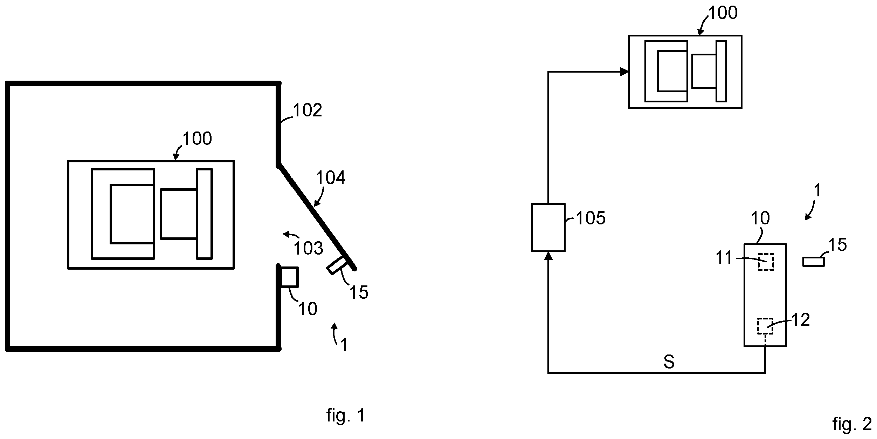

With reference to the example illustrated in Figure 1, the number 1 denotes a safety device according to the present invention for an industrial machine or plant, hereinafter only machine 100, configured to prevent dangerous operation of machine 100 when a dangerous condition is present for an operator.

In the present description and claims, a condition of danger means a condition in which, if the machine 100 were started, an operator could come into contact with a hazardous element of the machine 100. For example, with reference to Figure 1, in the case of a machine 100 surrounded by a protective barrier 102 provided with an access 103 protected by a movable guard 104, a condition of danger occurs when the movable guard 104 allows an operator to cross the access 103 and come near to the machine 100. In fact, in this case, if the machine 100 were started with the movable guard 104 allowing an operator to cross the access 103 and come near to the machine 100, the operator could come into contact with a hazardous element of the machine 100 such as, for example, a moving, pressurised, hot or other part.

With reference to Figures 1 and 2, the safety device 1 may comprise a safety switch 10 configured to be fixed to the protective barrier 102 near the access 103 and an actuator 15 configured to be fixed to the movable guard 104.

The safety device 1 further comprises sensor means 11 configured to detect at least the condition of danger and switching means 12 configured to safely transmit a safety signal S related to the condition detected by the sensor means 11.

The sensor means 11 depend on the type of safety device 1 i.e. the condition of danger to be detected.

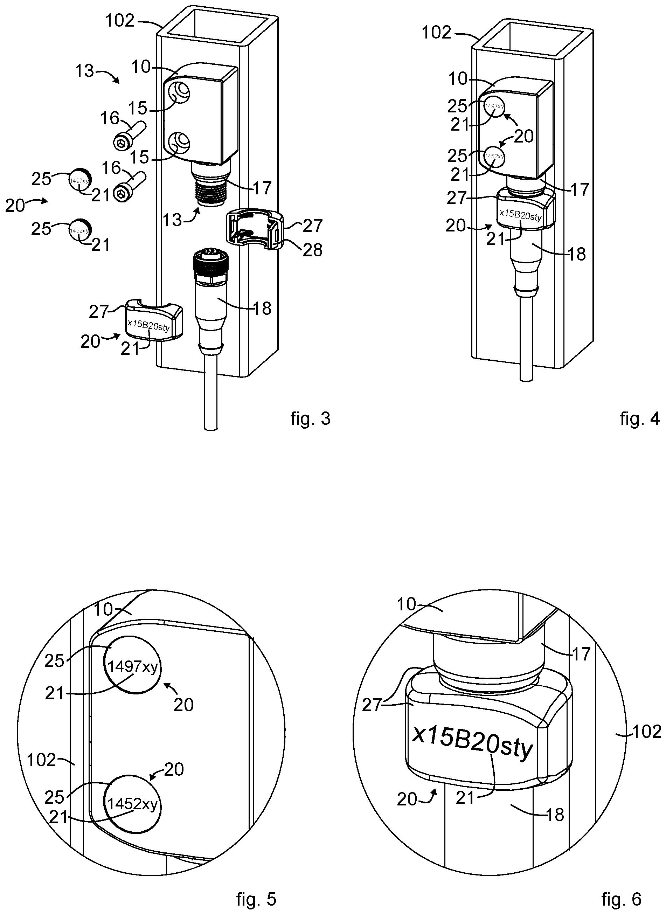

For example, with reference to Figures 3 to 6, sensor means 11 comprise proximity sensors associated with safety switch 10 to detect whether an actuator (not shown) is in the vicinity of safety switch 10.

In this case, the sensor means 11 detect the condition of danger when the actuator is not near the safety switch 10, i.e. when the movable guard 104 is open.

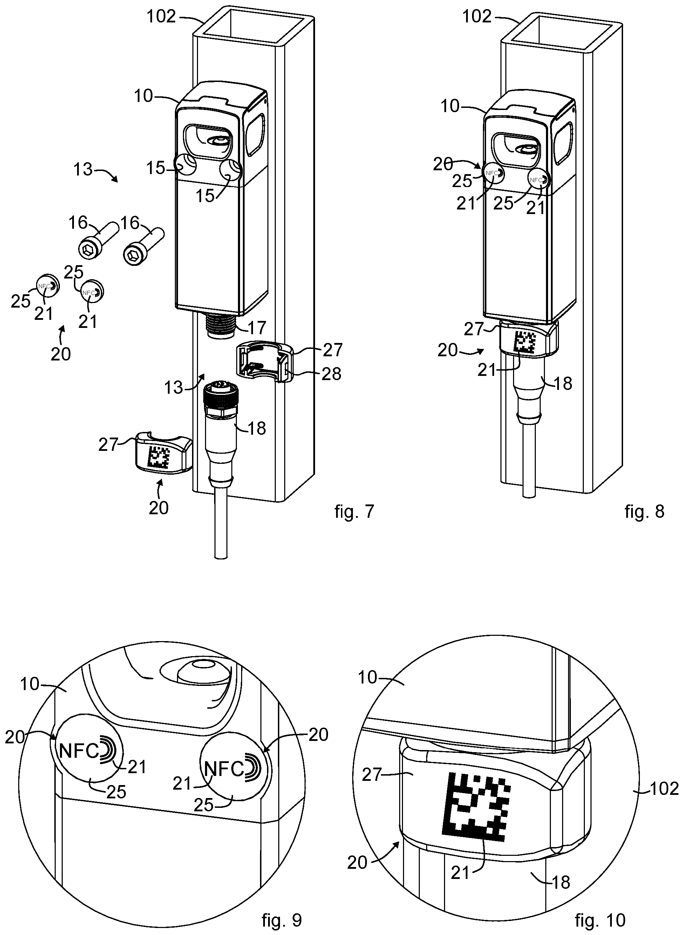

Alternatively, or in addition, with reference to Figures 7 to 10, the safety switch 10 may include a locking mechanism for locking an actuator (not shown) in contact with the safety switch 10. The locking mechanism may have a lock position in which it locks the actuator in contact with the safety switch 10 and an unlock position in which it allows the actuator to move away from the safety switch 10.

In this case, sensor means 11 may include position sensors to detect the locking mechanism position and detect the condition of danger when the locking mechanism is in the unlock position, i.e. when the movable guard 104 is, or can be, opened.

The person skilled in the art readily understands that the sensor means 11 can also be very different from those described here, depending on the condition of danger to be detected, without departing from the scope of the present invention.

The switching means 12 are configured to transmit the safety signal S to a control device 105 (Fig. 2) of the machine 100, which enables or disables the operation of the machine 100 depending on the safety signal S.

By way of example, if the safety signal S indicates that the sensor means 11 detect the condition of danger, the control device 105 inhibits operation of the machine 100. Conversely, if the safety signal S indicates that the sensor means 11 do not detect the condition of danger, the control device 105 allows the operation of the machine 100.

In preferred embodiments, the safety device 1 also comprises an electronic control unit (not shown) connected to the sensor means 11 and configured to drive the switching means 12 depending on the condition detected by the sensor means 11.

For example, the switching means 12 are configured to switch from an active state to an inactive state, or vice versa, at the time when the sensor means 11 detect the condition of danger. For example, the switching means 12 are configured to switch from an active state to an inactive state when the sensor means 11 detect the condition of danger.

Alternatively, or in addition, the switching means 12 can be driven by the electronic control unit to generate digital signals switching from the active to the inactive state and vice versa, i.e. sequences of bits, encoding a telegram according to a communication protocol. The communication protocol can be of known type such as, for example, IO-Link, Profinet, EtherCAT, EtherNet/IP, IO-Link Safety, Profisafe, CIP Safety, Safety over EtherCAT (FSoE), etc. or any other assimilated communication protocol. In this case, some bits of the telegram encode information relating to the condition detected by the sensor means 11.

Preferably, the telegram also comprises validation bits (CRC, watchdog, consecutive numbers with respect to previously transmitted telegrams) configured to guarantee the integrity of the telegram itself, generated as a function of the other bits of the telegram and/or depending on the telegrams previously transmitted.

In preferred embodiments, the switching means 12 comprise a pair of secure electronic outputs of the OSSD (Output Signal Switching Device) type driven by the electronic control unit.

Merely by way of example, an OSSD secure output in the active state transmits a signal and assumes a logical state of "1" or "ON" while in the inactive state it transmits no signal and assumes a logical state of "0" or "OFF".

The safety device 1 further comprises installation means 13 configured to enable installing the safety device 1 on the machine 100 or on a structure linked to it, for example the protective barrier 102, and generate an original installed condition.

Original installed condition means the condition in which the safety device 1 is mechanically and electrically correctly installed on the machine 100 to ensure the correct level of safety for the operator according to the standards applied.

It should be noted that here and hereafter "electrically" also means "electronically".

The installation means 13 comprise parts for mechanically connecting the safety device 1 to the machine 100 or an associated structure, for example the protective barrier 102.

The parts for the mechanical connection may comprise holes or slots obtained directly in the safety device 1 and corresponding fastening elements such as screws, bolts or the like.

In the examples of Figures 3 to 10, the parts for the mechanical connection comprise at least one fixing hole 15 obtained on the safety switch 10 and a respective fixing element 16, such as a screw, for example. Preferably, the parts for the mechanical connection also comprise at least one fixing hole obtained on the actuator 15, and a respective fixing element.

Alternatively, or additionally, the installation means 13 comprise parts for the electronic connection of the safety device 1 to the control unit of the machine 100. The parts for the electronic connection are connected to the switching means 12 and are configured to transmit the safety signal S to the control unit 105 of the machine 100.

In the examples of Figures 3 to 10, the parts for the electronic connection include at least a first connector 17 suitable for connection to the control device 105 of the machine 100.

The first connector 17 is either male or female and is suitable for connection to a second connector 18 which in turn is connected directly or indirectly to the control unit 105.

The safety device 1 further comprises anti-tamper or anti-tampering means 20 associated with the installation means 13 and configured to prevent access to the installation means 13 once the original installed condition of the safety device 1 has been reached.

In particular, the anti-tamper means 20 are configured to prevent an operator from modifying the original installed condition of the safety device 1. Preferably, the anti-tamper means 20 are configured to prevent an operator from reversibly and non-obviously modifying the original installed condition of the safety device 1. In other words, the operator, in order to be able to modify the original installed condition, must necessarily damage the anti-tamper means 20 thereby making the tampering evident.

In fact, the anti-tamper means 20 are such that they must necessarily be damaged by an operator in order to reach the installation means 13 and change the original installed condition of the safety device 1.

With reference to the examples in Figures 3 to 10, the anti-tamper means 20 comprise covering elements configured to prevent access from the outside to the mechanical connection means.

By way of example, with reference to Figures 3-5 and 7-9 the covering elements comprise sealing plugs 25 suitable for being inserted with an interference fit into each fixing hole 15 and above the respective fixing element 16. In this way, the sealing plugs 25 prevent an operator from reaching the fixing element 16 and thereby changing the original installed condition. Furthermore, the fact that sealing plugs 25 are inserted with an interference fit into the fixing holes 15 makes it necessary to damage the former in order to take them out of the respective fixing hole 15 so as to be able to act on the fixing element 16.

Alternatively, or in addition, anti-tamper means 20 also include protection members of the electronic connection means configured to prevent access from the outside to the electronic connection means.

For example, with reference to Figures 3, 4, 6 and 7, 8, 10, the protective parts of the electronic connection means comprise at least two shells 27 adapted to define between them a containment volume and to contain in the same at least part of the first and second connectors 17, 18 connected to each other. The two shells 27 are further configured to mechanically connect to each other by means of a shape coupling elements 28 arranged within said containment volume. In this way, the two shells 27 prevent an operator from reaching the first and second connectors 17, 18 and thereby changing the original installed condition. Furthermore, the fact that the shaped coupling elements 28 are arranged within the containment volume defined by the shells 27 makes it necessary to damage them in order to disconnect the first connector 17 from the second connector 18.

In accordance with an aspect of the present invention, each of said anti-tamper means 20 is associated with a respective identification element 21 configured to distinguish the respective anti-tamper means from other anti-tamper means. In particular, referring to Figures 3 to 10, each of said anti-tamper means 20 comprises a respective identification element 21 configured to distinguish the respective anti-tamper means 20 when undamaged from other undamaged anti-tamper means 20.

Preferably, each anti-tamper means 20 comprises a respective unique identification element 21 configured to distinguish the respective anti-tamper means 20 from other anti-tamper means 20. Even more preferably, the unique identification element 21 is configured to distinguish the respective anti-tamper means 20 from all other anti-tamper means 20.

In this case, unique means an identification element 21 consisting of attributes capable of generating more than 1000 different combinations. For example, an alphanumeric code consisting of 3 characters can generate at least 32000 different combinations.

Alternatively, the anti-tamper means 20 of the safety device 1 comprise a respective identification element 21 configured to distinguish them from other anti-tamper means unrelated to the safety device 1. In this case, the anti-tamper means 20 of the safety device 1 may comprise a respective identical identification element 21 for two or more anti-tamper means of the same safety device 1.

In particular, each of these anti-tamper means 20 comprises its own unique identification element 21.

Advantageously, the identification element 21 allows the manufacturer of the machine 100 to know and record exactly which specific anti-tamper means 20 the safety device 1 comprises in its original installed condition.

In this way, any possible tampering, i.e. any unauthorised modification of the original installed condition, can be easily detected by comparing the identification element 21 of the anti-tamper means 20 installed on the safety device 1 with the identification element 21 of the anti-tamper means 20 recorded at the time of making the original installed condition of the safety device 1.

In other words, the identification elements 21 make it possible to distinguish the original installed condition from a subsequent installed condition of the safety device 1.

This increases the safety of the safety device 1 and of the machine 100 on which it is installed as the anti-tamper means 20 according to the present invention always make any unauthorised and potentially dangerous modification of the original installed condition of the safety device 1 detectable.

In fact, any modification of the original installed condition necessarily entails damaging the original anti-tamper means 20 included in safety device 1 in its original installed condition and their replacement with anti-tamper means 20.

A further advantage is that the manufacturer of the machine 100 can change the installed condition of the safety device 1 registering, with each change, the identification element 21 of the new anti-tamper means 20 installed in the new original installed condition.

In other words, on the one hand the present invention always allows detecting whether the original installed condition of the safety device 1 has been changed without authorisation, and on the other hand the present invention allows the manufacturer of the machine 100 to change the original installed condition over time while retaining the ability to detect any unauthorised and potentially hazardous changes to the last original installed condition.

The identification element 21 can be of any type suitable to be recognised uniquely, e.g. it can be an optical, magnetic, electromagnetic element.

For example, with reference to Figures 3 to 6, the identification element 21 may comprise an alphanumeric code obtained or printed on a surface of each of the anti-tamper means 20. Preferably, the alphanumeric code is obtained on the outer surface of each of the anti-tamper means 20.

In other possible embodiments with reference to Figures 7, 8 and 10, the identification element 21 may comprise a graphic matrix code obtained on a surface of each of the anti-tamper means 20. The graphic matrix code may be one-dimensional, e.g. a bar code, or two-dimensional, e.g. a QR code.

Again, preferably, the graphic matrix code is obtained on the outer surface of each of the anti-tamper means 20.

In further embodiments with reference to Figures 7 to 9, the identification element may comprise a resonant circuit capable of being energized by an external antenna and transmitting a unique identification code to that antenna. For example, the resonant circuit may be of the NFC (Near Field Communication) or RFID (Radio Frequency Identification) type.

The present invention also relates to a process for producing the safety device 1 provided with anti-tamper means 20 described herein.

In particular, the process of the present invention provides at least one identification step in which each of the anti-tamper means 20 is associated with a unique identification element 21 configured to distinguish the respective anti-tamper means 20 from other anti-tamper means 20.

## Claims

1. Safety device (1) configured to be installed on an industrial machine or plant (100) and adapted to prevent the start-up of said machine (100) when said machine (100) is in a condition of potential danger to an operator, wherein said device comprises:
• sensor means (11) configured to detect at least said condition of danger;
• switching means (12) configured to transmit a safety signal (S) encoding the condition detected by said sensor means (11);
• installation means (13) configured to mechanically and/or electrically connect said safety device (1) to said machine (10) in an original installed condition of said device (1);
• anti-tamper means (20) associated with said installation means (13) and configured to prevent modification of said original installed condition of said safety device (1) on said machine (100);
**characterised in that** each of said anti-tamper means (20) comprises a respective identification element (21) configured to distinguish the respective anti-tamper means (20) from other anti-tamper means (20).

2. Safety device (1) according to claim 1, **characterised in that** said identification elements (21) enable said original installed condition to be distinguished from a subsequent installed condition of said safety device (1) .

3. Safety device (1) according to claim 1 or 2, **characterised in that** said identification element (21) comprises an alphanumeric code.

4. Safety device (1) according to claim 1 or 2, **characterised in that** said identification element (21) comprises a one- or two-dimensional matrix graphic code.

5. Safety device (1) according to claim 1 or 2, **characterised in that** said identification element (21) comprises a resonant electric circuit.

6. Safety device (1) according to any of the preceding claims, **characterised in that** each of said anti-tamper means (20) comprises a respective unique identification element (21) configured to distinguish the respective anti-tamper means (20) from all other anti-tamper means (20).

7. Safety device (1) according to any one of claims 1 to 5, **characterised in that** said anti-tamper means (20) comprise a respective identification element (21) configured to distinguish them from other anti-tamper means unrelated to said device (1).

8. Safety device (1) according to any of the preceding claims and wherein said installation means (13) comprise fixing holes (15) designed to accommodate fixing elements (16) to attach said safety device (1) to said machine (10), **characterised in that** said anti-tamper means (20) comprise sealing plugs (25) of said fixing holes (15) configured to prevent access to said fixing elements (16).

9. Safety device (1) according to any of the preceding claims and in which said installation means (13) comprise at least a first electrical connector (17) connected to said switching means (12) and configured to be connected to a second electrical connector (18) in turn connected to a control device (105) of said machine (100), **characterised in that** said anti-tamper means (20) comprise at least one protection element (27) applicable to at least one of said electrical connectors (17, 18) and configured to prevent disconnection of said first electrical connector (17) from said second electrical connector (18).

10. Safety device (1) according to any preceding claim, **characterised in that** it comprises a safety switch (10) and an actuator (15) configured to interact with said safety switch (10), wherein said safety switch (10) and said actuator (15) comprise respective installation means (13) provided with respective anti-tamper means (20).

11. Safety device (1) according to claim 9, **characterised in that** said safety switch (10) comprises said sensor means (11) and wherein said sensor means (11) are configured to detect the interaction of said actuator (15) with said safety switch (10).

12. Safety device according to any preceding claim, wherein said safety switch (10) is configured to be attached to a protective barrier (102) provided with an access (103) to said machine (10) and said actuator (15) is configured to be attached to a movable guard (104) of said access (103) to interact with said safety switch (10) upon closure of said movable guard (104).

13. Production method of a safety device (1) configured to be installed on an industrial machine or plant (100) and designed to prevent the start-up of said machine (100) when said machine (100) is in a condition of potential danger to an operator, wherein said safety device (1) comprises:
• sensor means (11) configured to detect at least said condition of danger;
• switching means (12) configured to transmit a safety signal (S) encoding the condition detected by said sensor means (11);
• installation means (13) configured to mechanically and/or electrically connect said safety device (1) to said machine (10) in an original installed condition of said safety device (1);
• anti-tamper means (20) associated with said installation means (13) and configured to prevent modification of said original installed condition of said safety device (1) on said industrial machine or plant (100);
wherein said method comprises an identification step in which each of said anti-tamper means (20), when not damaged, is assigned a respective unique identification element (21) configured to distinguish the respective anti-tamper means (20) from other anti-tamper means (20).
